# EUROPEAN PATENT SPECIFICATION

(11) **EP 2 343 125 B1**
(45) Date of publication and mention of the grant of the patent: **20.03.2019**
(21) Application number: 09814290.4
(22) Date of filing: 16.09.2009
(51) Int. Cl.: B01J 35/02, B01D 53/86, B01J 31/34

(54) **HYDROPHILIC FILMS AND COMPONENTS AND STRUCTURES USING SAME**
HYDROPHILE FILME UND KOMPONENTEN UND STRUKTUREN UNTER VERWENDUNG DAVON
FILMS ET COMPOSANTS HYDROPHILES ET STRUCTURES LES UTILISANT

(30) Priority: 16.09.2008 JP 2008236526; 06.10.2008 JP 2008260027
(43) Date of publication of application: 13.07.2011
(73) Proprietor: Kabushiki Kaisha Toshiba, Minato-ku Tokyo 105-8001 (JP); Toshiba Materials Co., Ltd., Isogo-Ku Yokohama-Shi Kanagawa 235-8522 (JP)
(72) Inventor: NAKANO, Kayo, Tokyo 105-8001 (JP); SATO, Akira, Tokyo 105-8001 (JP); SHIRAKAWA, Yasuhiro, Tokyo 105-8001 (JP); KUSAKA, Takao, Tokyo 105-8001 (JP); KASAMATSU, Shinya, Tokyo 105-8001 (JP)
(74) Representative: Henkel, Breuer & Partner
(86) International application number: PCT/JP2009/004627
(87) International publication number: WO 2010/032445

(56) References cited:
- WO-A1-00/06300
- WO-A1-2008/081589
- JP-A- 11 188 089
- JP-A- 2005 007 300
- JP-A- 2006 198 464
- JP-A- 2008 006 429

## Description

### FIELD

The present invention relates to a hydrophilic film, and a member and a structure each using the same.

### BACKGROUND

A member with a surface to which hydrophilicity is added is used in various areas such as anti-fogging, dew condensation prevention, stain-proofing, and printing of a water based coating material. A hydrophilic member using a titanium oxide based photocatalyst film is developed and applied to a n exterior wall, a window glass, and a rearview mirror of an automobile. A titanium oxide film changes in surface state when it is irradiated with ultraviolet rays included in the sunlight and becomes hydrophilic, and a film having photocatalysis exhibits high hydrophilicity by oxidizing and decomposing an organic matter adhering to its surface. On a building material or a window glass to which the photocatalyst film is applied, stain adhering to its surface is washed away by rains, thereby obtaining a stain -proofing effect.

When the member that becomes hydrophilic by light is applied, a state that there is no irradiation with light becomes a problem. The titanium oxide film decreases in hydrophilicity in a relatively short period of time, and thus when it is applied to, for example, an anti-fogging agent for a rearv iew mirror of an automobile, an anti-fogging effect is insufficient during night or in a state of being stored in a garage. In some of such members, it is devised to elongate the duration of hydrophilicity by mixing a hydrophilic oxide such as a silicon dioxide with the titanium oxide, but sufficient performance has not obtained. When ultraviolet rays are used as excitation light, there is a risk that excitation light becomes insufficient in the shade or indoors. For supplementing insufficient excitation light, nitrogen or sulfur is added to the titanium oxide, or carrying by platinum is performed, and thereby visible light responding is performed, but the wavelength range of available light does not enlarge so much, so that sufficient performance applicable to indoor use has not been obtained. The duration of a hydrophilic effect is also similar to that of conventional titanium oxide, and the hydrophilicity decreases in a short period in a dark place.

Tungsten oxide is used as a dielectric material for electronic devices, an optical element material, an electrochromic material, and a gas sensor material, and is further known as a visible light responsive photocatalyst material. The band gap of the tungsten oxide is 2.5 eV to 2.8 eV, and visible light in the vicinity of 450 nm can be used as excitation light, whereas ultraviolet rays of only 380 nm or lower can be used for the titanium oxide. Accordingly, the tungsten oxide can be used as photocatalyst in the wavelength range of light from an indoor fluorescent lamp or light bulb. The tungsten oxide is also known to exhibit hydrophilicity by light irradiation, and mainly there are reported films produced by a vacuum deposition method, a sputtering method, a laser ablation method, a sol gel method.

Reference 1 describes a photocatalyst material obtained by sputter-depositing tungsten oxide on a substrate, where tungsten oxide having a triclinic crystal structure is mainly used. Reference 1 discloses obtainment of hydrophilicity by excit ing a tungsten oxide film with visible light. Specifically, it describes that a contact angle (initial value) of the sputter-deposited tungsten oxide film with water is in the range of 10° to 30°, and the contact angle with water becomes 5° or less when the tungsten oxide film is irradiated with ultraviolet rays and about 20 minutes elapse thereafter. Non -patent Reference 1 discloses that a tungsten oxide film that is formed by a thermal deposition method or sol-gel method and heat treated thereafter at 400°C exhibits hydrophilicity.

A conventional tungsten oxide film exhibits hydrophilicity upon excitation by light, and performance in a state that light is insufficient becomes a problem. When hydrophilicity is made by applying heating, heat resistance of a substrate becomes a problem, and for a member with a large area, the method of heating also becomes a problem. When a sputtering method, a thermal deposition method, a sol-gel method, or the like is applied, the substrate having the tungsten oxide film formed thereon is also limited. When hydrophilicity is made in post-processing such as light irradiation or heating, its duration tends to be short and regular light irradiation or heating becomes necessary in a short period. Moreover, it is not possible to remove organic matters by only the hydrophilicity, and thus when an organic matter such as an oil component adheres to the surface, it must be removed by sufficient rain wa ter, water washing, or the like, resulting that use environment is limited. Accordingly, the performance to oxidize and decompose organic matters by photocatalysis is also needed, but sufficient photocatalytic performance has not been obtained with the conventional tungsten oxide film.

In order to form a uniform film using a tungsten oxide powder, a fine powder is needed. As a method of producing the fine tungsten oxide powder, in Reference 2, there is described a method to heat an ammonium paratungstate (APT) in the air to obtain a tungsten trioxide powder, where a tungsten trioxide powder with a primary particle diameter of 0.01 µm (BET specific surface area = 82 m²/g) is obtained. As a method of efficiently obtaining a fine tungsten oxide powder, thermal plasma processing is described in Reference 3, where a fine powder with a particle diameter of 1 nm to 200 nm is obtained. However, even when the fine tungsten oxide powder produced by applying one of these methods is used as it is, hydrophilicity by light is insufficient, and the hydrophilicity cannot be sustained for a long period. Thus, in the current situation, a tungsten oxide film exhibiting practical hydrophilicity has not been obtained.

Reference 4 discloses a photocatalyst which has high catalytic activity and is capable of responding to visible light by maintaining a monoclinic crystal structure when being in use, the photocatalyst comprising a base and a photocatalyst film formed on a surface of the base. The photocatalyst film is obtained by coating a photocatalyst material comprising tungsten oxide particles as a main component, said tungsten oxide particles having an average particle diameter of ≤ 0.5 µm and exhibiting a monoclinic crystal structure.

### RELEVANT REFERECNES

### Patent References

Reference 1: JP-A 2001-152130 (KOKAI)
Reference 2: JP-A 2002-293544 (KOKAI)
Reference 3:JP-A 2006-102737 (KOKAI)
Reference 4: JP-A 2008-006429 (KOKAI)

### Non-patent Reference

Non-patent Reference 1: J. Phys. D: Appl. Phys. 40 (2007) 1134-1137

### SUMMARY

An object of the present invention is to provide a hydrophilic film exhibiting excellent hydrophilicity irrespective of the presence of light irradiation and capable of maintaining its performance for a long period of time, and a member and a structure each using the same. The invention is defined by the claims.

In one aspect, the present invention thus relates to a hydrophilic film comprising:
a base film made of an organic resin material, and
a surface layer containing particles, the surface layer being formed on a first surface of the base film and having an arithmetic mean surface roughness Ra as defined in JIS B 0601 (2001) of from 1 nm to 1000 nm at a reference length of 100 µm, as determined by calculation from a cross-sectional curve observed and measured using a surface shape measuring apparatus, a scanning probe microscope or an electron microscope,
wherein the particles are at least one selected from tungsten oxide particles and tungsten oxide composite particles, have crystal structure, and exist in a state in which their crystal directions are not oriented, as determined by X-ray diffraction or back scattering electron diffraction,
and wherein the mean particle diameter of the particles is in a range of not less than 2.7 nm nor more than 75 nm, as determined by image analysis of an SEM or TEM picture, and the aspect ratio of the particles is in a range of not less than 1 nor more than 3.5, as determined by image analysis of an SEM or TEM picture.

In another aspect, the present invention relates to a member including the hydrophilic film according to the first aspect. In still another aspect, the present invention relates to a structure including the hydrophilic film according to the first aspect.

### Effects of the Invention

The hydrophilic film of the present invention exhibits hydrophilicity irrespective of the presence of light irradiation and can maintain such performance for a long period of time. Thus, applying the hydrophilic film as above makes it possible to provide a member and a structure that are capable of retaining hydrophilic performance for a long period of time.

### DETAILED DESCRIPTION

Hereinafter, modes for implementing the present invention will be explained. The hydrophilic film according to the present invention includes a base film, and particles existing at least on a surface of the base film, the particles being at least one type selected from tungsten oxide particles and tungsten oxide composite particles, (which will be referred to as tungsten oxide based particles, hereinafter). It is possible to make the tungsten oxide based particles exist on any surface of the base film.

The base film is made of an organic material. As a main composing material of the base film, an organic resin material such as polyethylene telephthalate, vinyl chloride, acrylic, polycarbonate, polyolefin, polyethylene, polypropylen, polystyren, and polytetrafluoroethylene is used. A thickness of the base film is preferably in the range of 10 µm to 250 µm.

In the hydrophilic film of the invention, the particles that are made to exist on the surface of the base film are not limited to the particles of tungsten oxide, and may also be the particles of a tungsten oxide composite. The tungsten oxide composite is such that tungsten oxide as a main constituent contains a transition metal element or other metal elements. The transition metal element is an element with an atomic number from 21 to 29, 39 to 47, 57 to 79, or 89 to 109. Using the composite of tungsten oxide and a metal element makes it possible to improve performance of the particles.

The tungsten oxide composite can contain a metal element in the form of a single metal element, a compound including a metal element, a complex compound of a metal element and tungsten oxide, or the like. The metal element contained in the tungsten oxide composite may itself also form a compound with other elements. An example of a typical form of the metal element is oxide. A method of combining the tungsten oxide with the metal element is not particularly limited, and various combining methods such as a mixing method to mix powders with each other, an impregnation method, a carrying method, and so on can be applied. The metal element may also be carried by the tungsten oxide in the form of a single element or a compound.

The tungsten oxide based particles used for the hydrophilic film have the mean particle diameter in the range of 2.7 nm to 75 nm. A BET specific surface area of the tungsten oxide based particles is preferably in the range of 4.1 m²/g to 820 m²/g. The mean particle diameter of the tungsten oxide based particles is obtained in a manner that the particles used for forming the hydrophilic film or the particles existing on the surface of the base film are observed by SEM or TEM, and their enlarged picture is subjected to image analysis. The mean particle diameter regards a mean value of a major axis of the particle and a minor axis thereof ((major axis + minor axis)/2) as a particle diameter to be obtained based on a mean diameter (D50) of integrated diameters with reference to volumes of particles with n = 50 or more. The mean particle diameter (D50) may also agree with the mean particle diameter converted from the specific surface area.

In order to obtain a surface that excels in hydrophilicity, the tungsten oxide based particles are preferably made to exist in a uniform state. Thus, it is preferable that the tungsten oxide based particles should have a small mean primary particle diameter and a large specific surface area. When the mean particle diameter of the tungsten oxide based particles is larger than 200 nm or when the BET specific surface area is smaller than 4.1 m²/g, sufficient properties (hydrophilicity and the like) cannot be obtained. When the mean particle diameter of the tungsten oxide based particles is smaller than 1 nm or when the BET specific surface area is larger than 820 m²/g, the particles are too small, resulting that handleability and dispersibility as a powder decrease. This makes it difficult to uniformly disperse the tungsten oxide based particles onto the surface of the base film to thereby make it impossible to exhibit sufficient hydrophilicity.

Further, generally, the larger the specific surface area is and the smaller the primary particle diameter is, the higher performance of a photocatalyst powder becomes. In the tungsten oxide based particles having photocatalytic performance, when the mean particle diameter is larger than 200 nm or when the BET specific surface area is smaller than 4.1 m²/g, the photocatalytic performance of the particles decreases, and it becomes difficult to form a uniform and stable surface. Further, when the primary particle diameter of the tungsten oxide based particles is too small, their dispersibility decreases and it is impossible to uniformly disperse the particles onto the surface of the base film. This also decreases the photocatalytic performance.

The mean particle diameter of the tungsten oxide based particles is preferably in the range of 5.5 nm to 51 nm. The BET specific surface area of the tungsten oxide based particles is more preferably in the range of 11 m²/g to 300 m²/g, and still more preferably in the range of 16 m²/g to 150 m²/g. When a dispersion liquid or coating material including the tungsten oxide based particles is used to form a film or when it is kneaded with a substrate and used, if the primary particle diameter is too small, dispersibility of the tungsten oxide based particles decreases. For improving such a point, it is preferable to use the tungsten oxide based particles with the mean particle diameter of 5.5 nm or larger.

Further, as for the tungsten oxide based particles forming the surface of the hydrophilic film, the aspect ratio of each of the particles is in the range of 1 to 3.5. The aspect ratio is a ratio of the major axis of the particle to the minor axis thereof (major axis/minor axis), and if the shape of the particle is a sphere, the ratio becomes 1. When the aspect ratio of the particles is larger than 3.5, a dispersion state of the particles on the surface of the base film becomes non-uniform based on the oblong shape of the particles. Thus, hydrophilicity of the surface of the film decreases. The aspect ratio of the tungsten oxide based particles is more preferably in the range of 1 to 2. The aspect ratio of the tungsten oxide based particles, similarly to the measurement of the mean particle diameter, is obtained in a manner that a SEM picture or a TEM picture of the particles is subjected to image-analysis.

Incidentally, the tungsten oxide based particles (powder) used for the hydrophilic film may also contain metal elements as impurities. The content of the metal elements as impurity elements is preferably 2 mass% or less. As the impurity metal elements, there are elements generally contained in a tungsten ore and contamination elements that are mixed in when a tungsten compound used as a raw material is produced, and Fe, Mo, Mn, Cu, Ti, Al, Ca, Ni, Cr, Mg, and so on are cited. It is not applicable when these elements are used as component elements of a composite.

The hydrophilic film of the invention is produced by applying a method such as forming a layer (surface layer) containing the tungsten oxide based particles on the base film, kneading the tungsten oxide based particles into the base film, forming a layer containing the tungsten oxide based particles in a forming process of the base film, or transferring a transfer film containing the tungsten oxide based particles to the base film. The method is selected appropriately according to the type, shape, or the like of the base film. It is preferable to apply the method in which the surface layer containing the tungsten oxide based particles is formed on the base film because the hydrophilic surface can be easily obtained.

The amount of the tungsten oxide based particles in the surface of the hydrophilic film is preferably set to be in the range of 0.1 mass% to 95 mass%. The amount of the tungsten oxide based particles denotes the content of particles in the layer when the particles are made to exist in the surface layer, and denotes the content of particles in a portion in the vicinity of the surface of the base film when the particles are kneaded into the base film. When the content of the particles is less than 0.1 mass%, there is a risk that hydrophilicity of the tungsten oxide based particles cannot be exhibited sufficiently. The content of the tungsten oxide based particles is more preferably 5 mass% or more. When the content of the tungsten oxide based particles is more than 95 mass%, there is a risk that the strength of the surface of the hydrophilic film decreases.

It is preferable that a thickness of the surface layer containing the tungsten oxide based particles should be in the range of not less than 2 nm nor more than 50 µm. When the thickness of the surface layer is less than 2 nm, it becomes difficult to form a uniform film. When the thickness of the surface layer is larger than 50 µm, a crack occurs in the surface layer or adhesion strength to the base film decreases and thus the surface layer is easily peeled off. The thickness of the surface layer is more preferably in the range of not less than 4 nm nor more than 5 µm, and still more preferably in the range of not less than 10 nm nor more than 1µm. When the tungsten oxide based particles are kneaded into the base film, it is only necessary that the tungsten oxide based particles are exposed at least on a surface to which hydrophilicity is added.

The surface layer containing the tungsten oxide based particles is formed in a manner that a dispersion liquid in which the tungsten oxide based particles are dispersed in a dispersion medium such as water or alcohol is applied on the base film by applying an application method such as spin coating, dip coating, spray coating, or bar coating. The tungsten oxide based particles have their zeta potential in an aqueous dispersion liquid with pH in the range of 1 to 7 to be minus, so that a good dispersion state can be achieved. Thus, it is possible to apply the tungsten oxide based particles on the base film thinly and uniformly.

The liquid to be applied on the base film may also be a mixed liquid (coating material) in which at least one binder component selected from an inorganic binder and an organic binder is added to the dispersion liquid of the tungsten oxide based particles. The content of binder component is preferably set to be in the range of 5 mass% to 99.9 mass%. By applying such a coating material on the base film to form the surface layer, strength, hardness, adhesion strength to the base film, and the like of the surface layer can be adjusted to a desired state.

As the inorganic binder, for example, there is used a product obtained by decomposing a hydrolytic silicon compound such as an alkyl silicate, a silicon halide, and a partial hydrolytic product of them, an organic polysiloxane compound or a polycondensate thereof, silica, colloidal silica, water glass, a silicon compound, phosphate such as zinc phosphate, metal oxide such as zinc oxide, alumina, or zirconia, dense phosphate, cement, gypsum, lime, frit for enamel, or the like. As the organic binder, for example, there is used fluorine based resin, silicone based resin, acrylic resin, epoxy resin, polyester resin, melamine resin, urethane resin, alkyd resin, or the like. The type of binder is appropriately selected according to the material of the base film or the property to be targeted.

Among the above-described binder components, at least one type selected from silica (SiO₂), alumina (Al₂O₃), and zirconia (ZrO₂) exhibits hydrophilicity and thus is a preferable material. Particularly silica exhibits high hydrophilicity. Using the inorganic binder composed of such metal oxide improves a hydrophilicity retaining time of the hydrophilic film. When the tungsten oxide based particles have the photocatalytic performance, the surface of the member is cleaned up by an effect of decomposing organic matters. In order to maintain hydrophilicity based on the photocatalytic performance for a long period, the content of the metal oxide as the binder component is preferably set to be in the range of 10 mass% to 50 mass%.

Particularly, silica also excels in transparency, so that it may also be contained in the surface layer in the range of 10 mass% to 80 mass%. When the hydrophilic film is applied on a surface of a window glass, a mirror, or the like, transparency is required for the hydrophilic film. When the hydrophilic film is applied to such a glass product, it is desirable to make a refractive index of the surface layer approximate to that of the glass. The tungsten oxide has a relatively high refractive index, but the tungsten oxide is mixed with silica (SiO₂) with a low refractive index, and thereby the refractive index of the surface layer decreases. This makes it possible to increase the transparency of the glass product to which the hydrophilic film is applied. When the content of silica is less than 10 mass%, an effect of decreasing the refractive index cannot be sufficiently obtained, and when it is larger than 80 mass%, the strength of the surface layer easily decreases.

The surface layer in the hydrophilic film is preferably formed on the base film via a underlayer. The hydrophilic film to be used at a place with a large light irradiation amount has a risk that an organic matter or the like is oxidized and decomposed by the tungsten oxide based particles, thereby causing peeling or chalking of the base film. Making the underlayer intervene between the surface layer and the base film enables durability of the hydrophilic film to be improved. Further, the underlayer improves adhesiveness to the base film and the surface layer.

The underlayer is preferably formed of a material that is high hydrophilic with respect to both the base film and the surface layer (tungsten oxide based particles). A thickness of the underlayer is preferably in the range of 10 nm to 200 nm. As a composing material of the underlayer, there are indicated silicone resins that are a silicone modified resin such as an acrylic modified silicone resin compound or a silicone-modified acrylic resin compound, a colloidal silica containing resin such as a resin in which colloidal silica particles in an organosol are silane-treated to react with acrylic or silicone, a polysiloxane containing resin in which alkoxysilanes and their condensate (an alkyl silicate) are mixed, and so on as examples.

The underlayer is formed by applying a solution containing the above-described resin compound on the base film. As a coating solution, a solution in which resin is dispersed in a solvent such as toluene, xylene, ketone, or alcohol, or an aqueous emulsion-type solution is used. An application method of the underlayer to the base film is not limited in particular, and various application methods such as brush coating, spray coating, spin coating, dip coating, roll coating, gravure coating, and bar coating can be applied. The underlayer may also be a silica film or an alumina film formed by a vapor deposition method or the like.

The hydrophilic film may also include a tackiness agent layer provided on a surface, of the base film, opposite to the surface having the surface layer formed thereon. Thus, the hydrophilic film provided with the tackiness agent layer makes it possible to easily paste the hydrophilic film on a surface of various members and products. This makes it possible to easily give hydrophilicity to various members and products without limiting properties or shapes of members and components each having the hydrophilic film provided thereon.

A material of the tackiness agent layer is appropriately selected, and for example, acrylic resin, an acrylic modified silicone resin compound, and a silicone-modified acrylic resin compound are contained as main components, and a material containing silicone-modified resin, colloidal silica, alcohols such as ethanol and propanol, and water can be applied. A thickness of the tackiness agent layer is not limited in particular, but it is preferably set to be 0.2 µm or more. A method of forming the tackiness agent layer is not limited in particular, and various application methods such as brush coating, spray coating, spin coating, dip coating, roll coating, gravure coating, and bar coating can be applied.

The hydrophilic film of the invention preferably has a light transmission property. Concretely, a light transmittance for a 550 nm wavelength is preferably 50% or more. The fact that the light transmittance for the 550 nm wavelength is 50% or more means that transparency of the film is high. According to the hydrophilic film as above, when the hydrophilic film is applied on a transparent member, transparency of the member is not impaired. When the light transmittance is less than 50%, the light transmittance becomes insufficient, and when the hydrophilic film is applied on a transparent member, its transparency is impaired.

The surface of the hydrophilic film of the invention (surface having the tungsten oxide based particles provided therein), based on the tungsten oxide based particles having the above-described mean particle diameter and aspect ratio, exhibits excellent hydrophilicity irrespective of the presence of light irradiation and the type of light. The light mentioned here refers to general light including visible light, light having a wavelength in an ultraviolet range, and the like, which are irradiated from a general illumination, such as a fluorescent light, sunlight, a white LED, an electric bulb, a halogen lamp, or a xenon lamp, or a blue LED, a blue laser, or the like as a light source. The hydrophilic film having the surface as above thus makes it possible to largely extend a retaining time of hydrophilicity. It is possible to improve hydrophilicity and a retaining time of the hydrophilicity, particularly, in a dark place or under light irradiation with low illuminance.

A crystal direction of the tungsten oxide based particles existing in the surface of the hydrophilic film is preferably not oriented. An orientation state of the crystal direction of the surface can be confirmed by performing X-ray diffraction or back scattering electron diffraction. For example, among peaks with 2θ existing in the range of 22° to 25° in X-ray diffraction, when the diffraction peak with the maximum intensity is denoted by A, the diffraction peak with the second largest intensity is denoted by B, and the diffraction peak with the third largest intensity is denoted by C, it is possible to determine that the crystal direction is not oriented when one of the following conditions (1) to (3) is satisfied. In measurement of peak intensity, a high position of a mountain is taken as a peak, and its height is read as intensity. When there is a shoulder, its height is read as peak intensity.
(1) When three peaks exist, an intensity ratio of peak B to peak A (B/A) is 0.3 or more, and an intensity ratio of peak C to peak A (C/A) is 0.3 or more.
(2) When two peaks exist, with the lowest intensity in a valley between peak A and peak B being denoted by D, the intensity ratio of peak B to peak A (B/A) is 0.3 or more, and peak D is larger than the intensity of peak B by 1/2 (D > B/2).
(3) When only one peak exists, a half value width of a peak is 1° or more.

When the tungsten oxide based particles existing in the surface of the hydrophilic film have an amorphous structure, it is not possible to obtain desired properties. Accordingly, the tungsten oxide based particles having a crystal structure are made to exist in the surface of the hydrophilic film. Using the tungsten oxide based particles with good crystallinity, in particular, makes it possible to improve hydrophilicity and a retaining time of the hydrophilicity in a dark place or under light irradiation with low illuminance. However, when the entire surface is seen as described above, it is preferable to make the tungsten oxide based particles exist in the surface so that the crystal direction of the tungsten oxide is not in an oriented state.

A typical crystal structure of the tungsten oxide is ReO₃ structure, and thus the crystal face with high reaction activity having oxygen in an outermost layer of the surface exposes easily. Accordingly, it absorbs water and exhibits high hydrophilicity. In a tungsten oxide film produced by a vapor deposition method, sputtering method, or sol gel method, the crystal becomes amorphous when the film is formed, and hence it is difficult to become hydrophilic. When it is heat treated and improved in crystallinity, such a film also becomes a hydrophilic surface. However, when the heat treatment temperature is increased, the crystal is oriented and the hydrophilicity decreases at the same time. This is conceivably because the crystal face that hardly exhibits hydrophilicity is large at the surface.

In contrast, in the hydrophilic film of the invention, the tungsten oxide based particles are used to form the surface. Accordingly, it is possible to allow the tungsten oxide or the tungsten oxide composite with high crystallinity to exist in the surface, and further there is obtained a state that a crystal face exhibiting hydrophilicity is directed toward an arbitrary direction. Then, it is possible to allow the tungsten oxide based particles to exist on the entire surface of the base film uniformly based on the mean particle diameter and aspect ratio of the tungsten oxide based particles, and thus it is possible to obtain a surface exhibiting higher hydrophilicity than by other film forming methods. Further, it becomes possible to allow hydrophilicity to be exhibited irrespective of the presence of light irradiation.

It is preferable that the hydrophilic film of the invention should exhibit the photocatalytic performance under visible light irradiation. Generally, the visible light is light having a wavelength in the region of 380 nm to 830 nm, and is light irradiated from a general illumination, such as a fluorescent light, sunlight, a white LED, an electric bulb, a halogen lamp, or a xenon lamp, or a blue LED, a blue laser, or the like as a light source. The photocatalytic performance is an operation such that upon absorption of light, a pair of electron and positive hole is excited with respect to one photon, and the excited electron and positive hole activate hydroxyl or acid at the surface by oxidation-reduction, and an active oxygen species generated by this activation oxidizes and decomposes organic gas and the like, and is further an operation to exhibit hydrophilicity, antibacterial/disinfection performance, antivirus performance and the like. It is preferable that the hydrophilic film should exhibit the photocatalytic performance in an ordinary indoor environment.

The photocatalytic performance of the hydrophilic film, namely, decomposing performance for organic matters is evaluated by, for example, applying oleic acid on the surface and measuring a change over time of a contact angle with water while irradiating the surface with visible light. When the hydrophilic film has the photocatalytic performance, even when the contact angle with water is large immediately after, for example, the oleic acid is applied on the surface, the photocatalytic performance is exhibited based on the visible light irradiation to thereby decompose the oleic acid, and thereby the contact angle with water decreases, and soon hydrophilicity is exhibited.

In order to give the photocatalytic performance to the surface of the hydrophilic film, the surface is formed using the tungsten oxide based particles having the photocatalytic performance. For example, the high photocatalytic performance can be obtained using particles of tungsten trioxide having a crystal structure of at least one type selected from monoclinic crystal and triclinic crystal (monoclinic crystal, triclinic crystal, or mixed crystal of monoclinic crystal and triclinic crystal) or a crystal structure in which rhombic crystal is mixed therewith, or particles of a composite based on this tungsten trioxide. Moreover, the photocatalytic performance can be further improved when the crystal structure of the tungsten trioxide is a mixed crystal of monoclinic crystal and triclinic crystal or a mixed crystal of monoclinic crystal, triclinic crystal, and rhombic crystal.

When the photocatalytic performance and the like are given to the hydrophilic film, it is also effective to use the tungsten oxide composite particles as particles. A transition metal element or other metal elements is/are combined with tungsten oxide in the form of a single element, a compound represented as oxide, a complex oxide, or the like. As for a combination form, various forms as described above can be applied. It is only necessary that a combined metal element exists in the surface layer together with the tungsten oxide. As a metal element to be combined with the tungsten oxide, at least one element selected from, for example, Ti, Zr, Mn, Fe, Pd, Pt, Cu, Ag, Ce, Zn, and so on is cited. The content of the metal element in the tungsten oxide composite is preferably set to be in the range of 0.001 mass% to 50 mass%.

When the content of the metal element is larger than 50 mass%, there is a risk that properties of the tungsten oxide particles deteriorate. The content of the metal element is more preferably 10 mass% or less, and still more preferably 5 mass% or less. A lower limit value of the content of the metal element is not limited in particular, but in order to effectively exhibit an effect of the combined metal element, the content of the metal element is preferably set to be 0.001 mass% or more. The content of the metal element is more preferably set to be 0.01 mass% or more, and still more preferably 0.1 mass% or more.

Among the transition metal elements to be combined with the tungsten oxide, Ti is effective in improving the photocatalytic performance. When titanium oxide (Tio₂) is made to exist in the surface layer, the performance in an environment irradiated with light including ultraviolet rays of the sunlight or the like can be improved. The content of the titanium oxide in the tungsten oxide composite is preferably set to be in the range of 0.01 mass% to 50 mass%. The content of the titanium oxide is set to be 0.01 mass% or more to thereby enable an effect of the titanium oxide to be effectively exhibited. When the content of the titanium oxide is larger than 50 mass%, the amount of the tungsten oxide particles is relatively decreases, resulting that there is a risk that hydrophilicity in a dark place decreases.

The titanium oxide is not only made to exist in the surface layer as the tungsten oxide composite, but also a stacked film of a layer containing, for example, the titanium oxide and the surface layer containing the tungsten oxide based particles may be formed on the base film. In the above case, the surface layer containing the tungsten oxide based particles is formed on the base film via the layer containing the titanium oxide. Such a layer structure thus makes it possible to easily obtain a surface in which the tungsten oxide based particles and the titanium oxide exist without preparing a coating solution containing the tungsten oxide based particles and the titanium oxide. This makes it possible to improve the photocatalytic performance of the hydrophilic film.

It is also effective to use a tungsten oxide composite containing at least one element selected from Cu, Ag, and Zn for the hydrophilic film. The elements each having an antibacterial property make it possible to provide a multifunctional hydrophilic film in which antibacterial performance, antifungal performance, antivirus performance, and so on are further improved. The content of at least one element selected from Cu, Ag, and Zn is preferably set to be in the range of 0.001 mass% to 1 mass%. When the content of the elements is set to be 0.001 mass% or more, the antibacterial performance, antivirus performance, and so on can be effectively exhibited. Even though the elements of 1 mass% or more are contained, cost is only increases and an effect of improving the performances is not seen very much. In order to achieve both the performances and the cost, it is effective to set the content in the range of 0.01 mass% to 0.1 mass%.

The surface of the hydrophilic film of the invention (surface in which the tungsten oxide based particles exist) has a surface roughness in which an arithmetic mean roughness Ra is in the range of 1 nm to 1000 nm with a reference length of 100 µm. The arithmetic mean roughness Ra is a value defined in JIS B 0601 (2001), and can be calculated from a cross-sectional curve observed and measured using a surface shape measuring apparatus, a scanning probe microscope, an electron microscope, or the like.

In order to obtain high hydrophilic performance, the surface is preferably smooth, but in order to extend a retaining time of the hydrophilic performance, slight irregularities are needed on the surface. Accordingly, the arithmetic mean roughness Ra of the surface is 1 nm or larger. When the arithmetic mean roughness Ra is larger than 1000 nm with the reference length of 100 nm, irregularities of the surface to which hydrophilicity is to be added become too large. Accordingly, there is a risk that effects of anti-fogging, stain-proofing and the like that are original effects based on hydrophilicity cannot be sufficiently obtained. When the arithmetic mean roughness Ra is larger than 1000 nm, the surface becomes clouded and is liable to be stained due to the irregularities of the surface, and also removal of stain by water becomes difficult to be performed.

Further, also in the case when the tungsten oxide based particles exist in the surface non-uniformly, such as when coarse particles of the tungsten oxide or the tungsten oxide composite exist in the surface, the arithmetic mean roughness Ra becomes large. In such a case, the activity of the tungsten oxide based particles is impaired, and the hydrophilic performance deteriorates. When the arithmetic mean roughness Ra of the surface is significantly large, the measurement of the contact angle with water as an evaluation method of hydrophilicity itself becomes difficult to be performed. It is preferable that the arithmetic mean roughness Ra when the reference length of the surface of the hydrophilic film is 100 µm should be in the range of 2 nm to 100 nm.

It is preferable that the surface of the hydrophilic film should be such that a mean length RSm of contour curve elements (coarse curve elements) with the reference length of 100 µm is twice or more than the arithmetic mean roughness Ra. When the RSm is twice or more than the Ra, the surface becomes more smooth, and high hydrophilicity can be exhibited. When the RSm is less than twice the Ra, irregularities of the surface become large. It is preferable that the mean length RSm of the contour curve elements of the surface should be triple or more than the arithmetic mean roughness Ra.

The tungsten oxide based particles (powder) used for the hydrophilic film of the invention are produced as follows, for example. The tungsten oxide particles are preferably produced applying a sublimation process. Combining a heat treatment process with the sublimation process is also effective. According to such a method, tungsten trioxide based particles having the above-described mean particle diameter (D50), aspect ratio, and crystal structure can be obtained stably. Moreover, the mean particle diameter (D50) approximates to the value converted from the BET specific surface area, and the particles with small variation in particle diameter can be obtained stably.

The sublimation process is a process in which tungsten trioxide particles are obtained by sublimating a metal tungsten powder or its molded component, a tungsten compound powder or its molded component, or a tungsten compound solution in an oxygen atmosphere. The sublimation is a phenomenon that a state change from a solid phase to a vapor phase, or from a vapor phase to a solid phase occurs without undergoing a liquid phase. The tungsten oxide powder in a particle state can be obtained by oxidizing the metal tungsten powder, tungsten compound powder, tungsten compound solution, or the like as a raw material while sublimating it.

When the tungsten oxide composite particles are produced, a transition metal element or other elements may also be mixed in the form of metal, compound, complex compound, or the like, in addition to the tungsten material. By simultaneously processing the tungsten oxide with other elements, complex compound particles of complex oxide of the tungsten oxide and other elements, or the like can be obtained. The tungsten oxide composite particles can also be obtained by mixing the tungsten oxide particles with or carrying them on single particles or compound particles of other metal elements. A method of combining the tungsten oxide with other metal elements is not limited in particular, and it is possible to apply various publicly known methods.

As a method of sublimating the tungsten material in the oxygen atmosphere in the sublimation process, processing selected from inductively coupled plasma processing, arc discharge processing, laser processing, electron beam processing, and gas burner processing is cited. Among them, in the laser processing or the electron beam processing, a raw material is irradiated with laser or electron beam to perform the sublimation process. The laser or electron beam has a small irradiation spot diameter, and thus it takes time to process a large amount of raw material at once. However, they have an advantage that it is not necessary to strictly control the particle diameter or stability of supply amount of the raw material powder.

The inductively coupled plasma processing or the arc discharge processing needs adjustment of a generating area of plasma or arc discharge, but it is capable of allowing oxidation reaction of a large amount of raw material powder to occur at once in the oxygen atmosphere. Further, the amount of raw material to be processed at once can be controlled. The gas burner processing needs a relatively low power cost, but it is difficult to process a large amount of raw material powder or raw material solution. Accordingly, the gas burner processing is inferior in productivity. Incidentally, the gas burner processing may be one having sufficient energy for causing sublimation, and is not limited in particular. A propane gas burner, an acetylene gas burner, or the like is used.

When the inductively coupled plasma processing is applied to the sublimation process, generally there is used a method in which plasma is generated using argon gas or oxygen gas, and the metal tungsten powder or the tungsten compound powder is supplied into this plasma. As the method of supplying the tungsten raw material into the plasma, for example, a method to inject the metal tungsten powder or the tungsten compound powder together with carrier gas, a method to inject a dispersion liquid in which the metal tungsten powder or the tungsten compound powder is dispersed in a predetermined liquid dispersion medium, and the like are cited.

The tungsten oxide based particles used for the hydrophilic film of the invention can be obtained just by the sublimation process as described above, but it is also effective to perform heat treatment process on the tungsten oxide based particles produced in the sublimation process. The heat treatment process is to heat treat the tungsten trioxide based particles obtained in the sublimation process at predetermined temperatures and for predetermined time in an oxidative atmosphere. Also in the case where the tungsten trioxide particles cannot be formed sufficiently by condition control or the like in the sublimation process, the percentage of the tungsten trioxide particles in the tungsten oxide particles can be 99% or more, substantially 100%, by performing the heat treatment. Further, the crystal structure of the tungsten trioxide particles can be adjusted to a predetermined structure in the heat treatment process.

As the oxidative atmosphere used in the heat treatment process, for example, air and oxygen-containing gas are cited. The oxygen-containing gas means inert gas containing oxygen. The heat treatment temperature is preferably set to be in the range of 200°C to 1000°C, and more preferably 400°C to 700°C. The heat treatment time is preferably set to be in the range of 10 minutes to 5 hours, and more preferably 30 minutes to 2 hours. By making the temperature and time of the heat treatment process fall within the above-described ranges, the tungsten trioxide can be formed easily from tungsten oxide other than the tungsten trioxide. Further, it is possible to adjust the crystal structure and crystallinity of the fine tungsten trioxide powder.

In order to form the surface layer using the above-described tungsten oxide particles or tungsten oxide composite particles, when the heat treatment is performed, the temperature and the time are appropriately adjusted. Further, in order to allow the tungsten oxide particles or the tungsten oxide composite particles to exhibit the photocatalytic performance, their crystal structure is important, so that conditions not to give too much distortion to the particles in a preparation process of the coating solution for forming the surface layer (dispersion treatment process of the particles and the like) are set.

A hydrophilic member and a hydrophilic structure of the invention each include the hydrophilic film of the invention. The hydrophilic film is to give excellent hydrophilicity to a surface of the member and the structure without limitations in terms of materials or shapes of the member and the structure. When the hydrophilic film has the photocatalytic performance, it is possible to give hydrophilicity and the photocatalytic performance to various members and structures. The hydrophilic film is pasted on a surface, of a manufactured member or structure thereafter, where hydrophilicity is required, or it is integrated during a manufacturing process of the member or the structure. As a material forming the member or the structure, a glass, a ceramic, a plastic, a resin, a paper, a fiber, a metal, a wood, and so on are cited. The member and the structure include products manufactured using them as materials.

As the products to which the hydrophilic member or the hydrophilic structure is applied, air-conditioners, air cleaning devices, electric fans, refrigerators, microwave ovens, dish washer/driers, rice cookers, pot lids, pots, IH heaters, washing machines, vacuum cleaners, lighting apparatuses (lamps, apparatus bodies, shades, and the like), casings of personal computers, keyboards, cellular phones, landline phones, public phones, button portions and touch panels of vending machines, sanitary products, toilets, washbowls, mirrors, bathrooms (walls, ceilings, floors, and the like), building materials (interior walls, ceiling materials, floors, and exterior walls), interior products (curtains, wall papers , tables, chairs, sofas, shelves, beds, beddings, and the like), glasses, sashes, hand rails, doors, knobs, stationery, kitchen utensils, members used in the inside space of an automobile, exteriors, glasses, rearview mirrors, door mirrors and the like of an automobile are cited.

The hydrophilic film of the invention has high hydrophilicity irrespective of the presence of light irradiation, and is further capable of maintaining the performance for a long period of time. Thus, applying the hydrophilic film as above makes it possible to provide a member, a structure, and a product that are capable of exhibiting high hydrophilicity for a long period of time even in a dark place or under light irradiation with low illuminance. When the tungsten oxide based particles having the photocatalytic performance are used, it becomes possible to provide a film, a member, a structure, and a product each having photocatalytic performance such as organic matter decomposing performance, hydrophilicity, antibacterial/antifungal performance, and antivirus performance. According to the hydrophilic film exhibiting the photocatalytic performance under irradiation with visible light, even when the hydrophilicity decreases due to stains by organic matters, the surface can become hydrophilic within a short period of time by irradiation with light. Thus, the hydrophilicity, the antibacterial/disinfection performance, and the like can be maintained for a long period.

### EXAMPLES

Next, specific examples of the present invention and evaluation results thereof will be described.

### (Example 1)

First, a tungsten oxide powder with a mean particle diameter of 0.5 µm was prepared as a raw material powder. This raw material powder was sprayed with carrier gas (Ar) on RF plasma, and further, as reaction gas, argon was supplied at a flow rate of 40 L/min and oxygen was supplied at a flow rate of 40 L/min. In this manner, a sublimation process of subjecting the raw material powder to oxidation reaction while sublimating it was carried out to produce a tungsten oxide powder. Further, the tungsten oxide powder was heat treated under conditions of 400°C × 2 hours in the atmosphere.

Next, the tungsten oxide powder was mixed with an n-butanol as a dispersion medium, and further as a binder, an ethyl silicate of 20% by weight (SSC-1 made by COLCOAT CO., Ltd.) was added to the tungsten oxide to be dispersion-treated, and then a coating material (its concentration 5%) was prepared. This coating material was applied on a base film (made of PET and its thickness 75 µm) of A4 size to have a thickness of 10 µm by a bar coater to be dried at 120°C and for 30 minutes, and thereby a film having a surface layer containing tungsten oxide particles was produced.

The surface layer of the obtained film was evaluated, and a major axis, a minor axis, and a mean particle diameter (D50) of the tungsten oxide particles, and a thickness were measured. The mean particle diameter was measured by image analysis of a TEM picture. For TEM observation, H-7100FA made by Hitachi, Ltd. was used, an enlarged picture was subjected to image analysis and 50 particles or more were extracted, and integrated diameters with reference to volumes were obtained and the D50 was calculated. Similarly, the major axis, the minor axis, and an aspect ratio of the particles were obtained. Further, measurement of a BET specific surface area of the particles before the coating material was produced was performed using a specific surface area measuring apparatus Macsorb 1201 made by Mountech. Preprocessing was carried out under conditions of 200°C × 20 minutes in nitrogen. The mean particle diameter and the aspect ratio (a mean value) of the tungsten oxide particles in the surface layer, the thickness of the surface layer, and a mean particle diameter converted from the specific surface area of the powder before the coating material was produced are shown in Table 1.

Next, a surface roughness (an arithmetic mean roughness Ra, a mean length RSm) of the obtained surface layer was measured using a surface profiler Dektak 6M made by ULVAC, Inc. The surface roughness was measured with a reference length of 100 µm. Further, X-ray diffraction of the surface layer was performed using an X-ray diffractometer JDX-3500 made by JEOL Ltd. to confirm orientation of a crystal direction. Consequently, it was confirmed that the surface layer is smooth, in which the Ra is 35 nm and the RSm is 190 nm, and the crystal direction is not oriented. Further, a transmittance when it was irradiated with light with a wavelength of 550 nm was measured using a UV-Vis spectrophotometer UV-2550 made by SHIMADZU CORPORATION. As a result, the light transmittance was 70%.

Next, hydrophilicity of the surface layer was evaluated as follows. A contact angle of the surface layer with a water droplet of 0.4 mg was measured using a contact angle meter (CA-D made by Kyowa Interface Science Co., Ltd) at every certain time. The contact angle was measured immediately after the surface layer was produced, after it was stored for three days in a dark place in an environment of an ordinary laboratory, and after it was stored further for one month in the dark place. Further, the film after being stored for one month in the dark place was irradiated with visible light for one hour, and thereafter the contact angle was also measured. A white fluorescent light (FL20SS · W/18, made by TOSHIBA LIGHTING & TECHNOLOGY CORPORATION) was used as a light source, and an ultraviolet cutting filter (Kralex N-169, made by Nitto Jushi Kogyo Co., Ltd.) was used to cut wavelengths under 380 nm. Its illuminance was adjusted to 1500 lx. Evaluation results thereof are shown in Table 2.

The definition of hydrophilicity is unclear, but it is often said that hydrophilicity is exhibited when the contact angle is 30° or less. Particularly, it is said that high hydrophilicity is exhibited when the contact angle is 10° or less. It was confirmed that this sample maintains hydrophilicity for a long period in a dark place.

Further, in order to confirm a hydrophilic effect by organic matter decomposition of photocatalyst, oleic acid was applied on the obtained surface layer by a method described in JIS R 1703-1 (2007), and transition of the contact angle with water when it was irradiated with visible light with an illuminance of 1500 lx was evaluated. A light source similar to the above one was used. Evaluation results after 24 hours, 48 hours, and 72 hours have elapsed from the visible light irradiation are shown in Table 2. For comparison, a black light (FL20S · BLB · JET20W made by TOSHIBA LIGHTING & TECHNOLOGY CORPORATION) was used to evaluate the contact angle after being irradiated with ultraviolet rays (0.5 mW/cm²) for 72 hours. Sufficient hydrophilicity was not exhibited in the beginning of irradiation with visible light, but it was confirmed that the contact angle with water decreases over time, and the oleic acid is decomposed. However, its effect was small.

### (Examples 2, 3) (Example 3 not according to the invention)

A pellet of a tungsten oxide powder whose density was 4.5 g/cm³ was prepared as a raw material. This raw material was put in a reaction vessel and was irradiated with a Co₂ laser while oxygen was supplied at a flow rate of 10 L/min and the pressure was kept at 3.5 kPa. A tungsten oxide powder produced by such laser processing was heat treated under conditions of 700°C × 0.5 hour in the atmosphere, and thereby tungsten oxide particles in Example 2 were obtained. Further, a tungsten oxide powder produced through a sublimation process similar to that in Example 1 was heat treated under conditions of 900°C × 1.5 hours in the atmosphere, and thereby tungsten oxide particles in Example 3 were obtained.

A surface layer was formed on a PET film using the particles in each of Examples 2 and 3 similarly to Example 1, and a mean particle diameter and an aspect ratio of the particles in the surface layer, a thickness of the surface layer were measured. Measurement results thereof are shown in Table 1. Further, an orientation state, a light transmittance, and hydrophilicity of the surface layer were evaluated similarly to Example 1. Evaluation results of the hydrophilicity are shown in Table 2. The surface layer was not oriented in both Example 2 and Example 3, and the light transmittance was 70%. As is clear from Table 2, it was confirmed that hydrophilicity is maintained in a dark place. The decomposition of oleic acid was confirmed, but its effect was small.

### (Comparative Example 1)

A tungsten oxide powder produced through a sublimation process similar to that in Example 1 was heat treated under conditions of 1000°C × 0.5 hour in the atmosphere, and thereby tungsten oxide particles in Comparative Example 1 were obtained. A surface layer was formed on a PET film using the above particles similarly to Example 1, and a mean particle diameter and an aspect ratio of the particles in the surface layer, a thickness of the surface layer were measured. Measurement results thereof are shown in Table 1. Further, an orientation state, a light transmittance, and hydrophilicity of the surface layer were evaluated similarly to Example 1. Evaluation results of the hydrophilicity are shown in Table 2. The surface layer was not oriented in Comparative Example 1, but the light transmittance was 30%. As is clear from Table 2, it was confirmed that a contact angle immediately after deposition is large and the contact angle is increased in a dark place. The decomposition of oleic acid was extremely slow.

### (Example 4)

A surface layer with a thickness of 55 µm was produced on a PET film using the particles obtained in Example 2 similarly to Example 1. As a result, hydrophilicity similar to that in Example 2 was exhibited, but a crack occurred in the film partially and problems in terms of productivity and handleability of the film were caused. Further, a transmittance was low, which was 40%, and the film was not suitable for being pasted on a transparent member.

### (Example 5)

A coating material was produced using the particles obtained in Example 2 similarly to Example 1. A polysiloxane coating material (GLASCA made by JSR Corporation) was applied on a PET film of A4 size as a underlayer, and then the coating material was applied on the underlayer to have a thickness of 0.3 µm by a bar coater to be dried at 120°C for 30 minutes, and thereby a film having a surface layer was produced. Further, a tackiness agent was applied on a surface opposite to the surface having the coating material applied thereon. As a result, in terms of hydrophilicity, a result similar to that of Example 2 was obtained. Further, a tackiness agent layer was included, so that it was possible to easily paste the film on another member.

### (Example 6)

A tungsten oxide powder produced through a sublimation process similar to that in Example 1 was heat treated under conditions of 500°C × 2 hours in the atmosphere, and thereby tungsten oxide particles in Example 6 were obtained. A surface layer with a thickness of 0.3 µm was formed on a PET film using the above particles similarly to Example 1, and a mean particle diameter and an aspect ratio of the particles in the surface layer, and the thickness of the surface layer were measured. Measurement results thereof are shown in Table 1. Further, an orientation state, a light transmittance, and hydrophilicity of the surface layer were evaluated similarly to Example 1. Evaluation results thereof are shown in Table 2.

The surface layer in Example 6 was not oriented, and the light transmittance was 80% or more. As is clear from Table 2, it was confirmed that a contact angle of 10° or less is exhibited even in a dark place and high hydrophilicity is maintained in the dark place for a long period. Further, oleic acid was decomposed and high hydrophilicity was exhibited after light irradiation for 72 hours. The reason why Example 6 exhibited higher hydrophilicity in the dark place than Examples 1 to 3 and further obtained a high photocatalytic effect is conceivably because crystallinity improved by optimizing the production conditions.

### (Example 7)

A sublimation process and a heat treatment process similar to those in Example 3 except that a tungsten oxide powder with a large amount of Fe, Mo, and so on was used as a raw material to be placed in plasma were performed to produce a tungsten oxide composite powder containing 300 ppm of Fe. Obtained tungsten oxide composite particles were used to form a surface layer on a PET film similarly to Example 6, and a mean particle diameter and an aspect ratio of the particles in the surface layer, and a thickness of the surface layer were measured. Measurement results thereof are shown in Table 1. Further, an orientation state, a light transmittance, and hydrophilicity of the surface layer were evaluated similarly to Example 1. Evaluation results thereof are shown in Table 2. The surface layer was not oriented, and the light transmittance was 80% or more. Similarly to Example 6, high hydrophilicity was exhibited even in a dark place, and further a high photocatalytic effect was confirmed.

### (Example 8)

A titanium oxide (Tio₂) powder of 10 mass% was mixed with the tungsten oxide particles obtained in Example 6. An intermediate layer was formed on a PET film using such a tungsten oxide composite powder (particles) similarly to Example 6, and a mean particle diameter and an aspect ratio of particles in a surface layer, and a thickness of the surface layer were measured. Measurement results thereof are shown in Table 1. Further, an orientation state, a light transmittance, and hydrophilicity of the surface layer were evaluated similarly to Example 1. Evaluation results thereof are shown in Table 2. The surface layer was not oriented, and the light transmittance was 80% or more. Similarly to Example 6, high hydrophilicity was exhibited even in a dark place, and further a high photocatalytic effect was confirmed.

### (Example 9)

A titanium (TiO₂) layer was formed on a PET film, and then the coating material prepared in Example 6 was applied on the titanium layer to have a thickness of 0.3 µm to form a surface layer. A mean particle diameter and an aspect ratio of particles in the surface layer, and a thickness of the surface layer were measured similarly to Example 1. Measurement results thereof are shown in Table 1. Further, an orientation state, a light transmittance, and hydrophilicity of the surface layer were evaluated similarly to Example 1. Evaluation results thereof are shown in Table 2. The surface layer was not oriented, and the light transmittance was 80% or more. Similarly to Example 6, high hydrophilicity was exhibited even in a dark place, and further a high photocatalytic effect was confirmed.

### (Example 10)

A copper oxide (CuO) powder of 1 mass% was mixed with the tungsten oxide particles obtained in Example 6. A surface layer was formed on a PET film using a tungsten oxide composite powder (particles) obtained in this manner similarly to Example 6, and a mean particle diameter and an aspect ratio of the particles in the surface layer, and a thickness of the surface layer were measured. Measurement results thereof are shown in Table 1. Further, an orientation state, a light transmittance, and hydrophilicity of the surface layer were evaluated similarly to Example 1. Evaluation results thereof are shown in Table 2. The surface layer was not oriented, and the light transmittance was 80% or more. Similarly to Example 6, high hydrophilicity was exhibited even in a dark place, and further a high photocatalytic effect was confirmed.

### (Example 11)

A colloidal silica of 30 mass% was added to the coating material prepared in Example 6. A surface layer with a thickness of 0.3 µm was formed on a PET film using such a coating material similarly to Example 6, and a mean particle diameter and an aspect ratio of particles in the surface layer, and the thickness of the surface layer were measured. Measurement results thereof are shown in Table 1. Further, an orientation state, a light transmittance, and hydrophilicity of the surface layer were evaluated similarly to Example 1. Evaluation results thereof are shown in Table 2. The surface layer was not oriented, and the light transmittance was 80% or more. Similarly to Example 6, high hydrophilicity was exhibited even in a dark place, and further a high photocatalytic effect was confirmed.

### (Example 12)

A silver nitrate of 0.002 mass% by Ag conversion was added to the coating material prepared in Example 6 to perform photoreduction processing, and then an obtained coating material was applied on a PET film to have a thickness of 0.3 µm to form a surface layer. A mean particle diameter and an aspect ratio of particles in the surface layer, and a thickness of the surface layer were measured. Measurement results thereof are shown in Table 1. Further, an orientation state, a light transmittance, and hydrophilicity of the surface layer were evaluated similarly to Example 1. Evaluation results thereof are shown in Table 2. The surface layer was not oriented, and the light transmittance was 80% or more. Similarly to Example 6, high hydrophilicity was exhibited even in a dark place, and further a high photocatalytic effect was confirmed. Further, it was confirmed that Example 12 has an antibacterial property irrespective of the presence of light irradiation.

### (Comparative Example 2)

A tungsten oxide film with a thickness of 0.1 µm was formed on a polyimide film by applying a sputtering method. Properties of the obtained film were measured similarly to Example 1. Measurement results thereof are shown in Table 1. Further, hydrophilicity of the obtained film was evaluated similarly to Example 1. Evaluation results thereof are shown in Table 2. As a result of orientation being evaluated, the tungsten oxide film had a crystal structure in which triclinic crystal is oriented. Its light transmittance was 50%. The film was oriented, so that hydrophilicity immediately after the film was formed and after the film was stored in a dark place was low. On the other hand, by irradiation with visible light, a decrease in contact angle was seen, but a result of hydrophilicity was insufficient. Further, oleic acid decomposition performance was low.

### (Comparative Example 3)

A silica (SiO₂) film with a thickness of 0.5 µm was formed on a PET film using colloidal silica. Properties of the obtained film were measured similarly to Example 1. Measurement results thereof are shown in Table 1. Further, hydrophilicity of the obtained film was evaluated similarly to Example 1. Evaluation results thereof are shown in Table 2. High hydrophilicity was exhibited immediately after the film was formed, but while the film being stored in a dark place, the hydrophilicity decreased. This is conceivably because the film absorbed dirt in the atmosphere. No change by light irradiation was seen. As a matter of course, no oleic acid decomposition performance was obtained.

### (Comparative Example 4)

An anatase-type titania sol coating material with a polysiloxane resin as a binder was used to form a film with a thickness of 0.3 µm on a PET film. Properties of the obtained film were measured similarly to Example 1. Measurement results thereof are shown in Table 1. Further, hydrophilicity of the obtained film was evaluated similarly to Example 1. However, even when a sample stored in a dark place for one month was irradiated with visible light, no change in contact angle was confirmed, so that measurement results of hydrophilicity after ultraviolet ray irradiation are shown in Table 2. Evaluation results thereof are shown in Table 2. Although it was small, the film had a hydrophilic tendency immediately after it was formed, but while the film being stored in a dark place, its hydrophilicity decreased. There was a tendency of a contact angle to decrease after ultraviolet ray irradiation, and an effect by light irradiation was seen. Even in a decomposing test of oleic acid, hydrophilicity was exhibited only under ultraviolet ray irradiation.

**[Table 1]**

| | PROPERTIES OF PARTICLE AND SURFACE LAYER | | | |
|---|---|---|---|---|
| | MEAN PARTICLE DIAMETER (D50) [nm] | ASPECT RATIO | MEAN PARTICLE DIAMETER CONVERTED FROM SPECIFIC SURFACE AREA [nm] | FILM THICKNESS [µm] |
| EXAMPLE 1 | 9 | 1.6 | 9 | 10 |
| EXAMPLE 2 | 30 | 1.7 | 28 | 10 |
| EXAMPLE 3^{#} | 85 | 1.8 | 82 | 11 |
| EXAMPLE 4 | 30 | 1.7 | 28 | 55 |
| EXAMPLE 5 | 30 | 1.7 | 28 | 0.3 |
| EXAMPLE 6 | 27 | 1.2 | 27 | 0.3 |
| EXAMPLE 7 | 26 | 1.3 | 24 | 0.3 |
| EXAMPLE 8 | 26 | 1.4 | 26 | 0.3 |
| EXAMPLE 9 | 26 | 1.2 | 25 | 0.3 |
| EXAMPLE 10 | 28 | 1.2 | 27 | 0.3 |
| EXAMPLE 11 | 25 | 1.2 | 24 | 0.3 |
| EXAMPLE 12 | 27 | 1.3 | 26 | 0.3 |
| COMPARATIVE EXAMPLE 1 | 190 | 3.6 | 187 | 10 |
| COMPARATIVE EXAMPLE 2 | - | - | - | 0.1 |
| COMPARATIVE EXAMPLE 3 | 10 | - | - | 0.5 |
| COMPARATIVE EXAMPLE 4 | 8 | - | 4 | 0.3 |

| | | | | |
|---|---|---|---|---|
| # (not according to the invention) | | | | |

**[Table 2]**

| | HYDROPHILICITY EVALUATION (CONTACT ANGLE MEASUREMENT RESULTS) | | | | | | | |
|---|---|---|---|---|---|---|---|---|
| | IMMEDIATELY AFTER DEPOSITION | STORAGE IN DARK PLACE | | | OLEIC ACID DECOMPOSITION TEST | | | |
| | | AFTER 3 DAYS | AFTER 1 MONTH | | VISIBLE LIGHT IRRADIATION | | | AFTER 72 HRS OF ULTRAVIOLET LIGHT IRRADIATION |
| | | | | VISIBLE LIGHT IRRADIATION FOR 1 HR | AFTER 24 HRS | AFTER 48 HRS | AFTER 72 HRS | |
| EXAMPLE 1 | 6 | 7 | 8 | 6 | 68 | 48 | 15 | 18 |
| EXAMPLE 2 | 5 | 6 | 8 | 5 | 71 | 45 | 17 | 16 |
| EXAMPLE 3^{#} | 8 | 10 | 12 | 8 | 65 | 37 | 20 | 21 |
| EXAMPLE 4 | 7 | 8 | 10 | 6 | 69 | 40 | 19 | 23 |
| EXAMPLE 5 | 5 | 6 | 8 | 5 | 72 | 55 | 16 | 15 |
| EXAMPLE 6 | 4 | 5 | 4 | 4 | 67 | 22 | 4 | 5 |
| EXAMPLE 7 | 6 | 7 | 8 | 7 | 67 | 23 | 5 | 7 |
| EXAMPLE 8 | 7 | 8 | 9 | 7 | 67 | 20 | 6 | 7 |
| EXAMPLE 9 | 6 | 6 | 7 | 5 | 66 | 22 | 5 | 7 |
| EXAMPLE 10 | 6 | 6 | 7 | 6 | 69 | 26 | 5 | 6 |
| EXAMPLE 11 | 6 | 7 | 8 | 6 | 65 | 22 | 5 | 5 |
| EXAMPLE 12 | 7 | 7 | 8 | 6 | 64 | 24 | 7 | 6 |
| COMPARATIVE EXAMPLE 1 | 15 | 20 | 25 | 16 | 70 | 45 | 35 | 40 |
| COMPARATIVE EXAMPLE 2 | 25 | 26 | 30 | 20 | 60 | 51 | 46 | 38 |
| COMPARATIVE EXAMPLE 3 | 4 | 20 | 33 | 35 | 70 | 69 | 72 | 71 |
| COMPARATIVE EXAMPLE 4 | 27 | 32 | 45 | 4* | 55 | 60 | 59 | 4 |

| | | | | | | | | |
|---|---|---|---|---|---|---|---|---|
| *: IRRADIATED WITH ULTRAVIOLET LIGHT INSTEAD OF VISIBLE LIGHT # (not according to the invention) | | | | | | | | |

### (Examples 13, 14)

In Example 13, the tungsten oxide particles obtained in Example 6 were dispersed in an aqueous chloroplatinic acid solution, and then visible light irradiation was performed and methanol was put in, and carrying by a photo-precipitation method was performed. Centrifugal separation was carried out, cleaning by removal of a supernatant liquid and addition of water was performed twice, and thereafter a powder from which the supernatant liquid was removed was dried at 110°C for 12 hours, and thereby a tungsten oxide composite powder containing 0.1 mass% of Pt was produced.

In Example 14, the tungsten oxide particles obtained in Example 6 were dispersed in an aqueous palladium chloride solution. This dispersion liquid was centrifugally separated, and cleaning by removal of a supernatant liquid and addition of water was performed twice, and thereafter a powder from which the supernatant liquid was removed was dried at 110°C for 12 hours, and thereby a tungsten oxide composite powder containing 0.5 mass% of Pd was produced.

A surface layer with a thickness of 0.3 µm was formed on a PET film using the tungsten oxide composite powder in each of Example 13 and Example 14 similarly to Example 1. Properties of particles in the surface layer, an orientation state, a light transmittance, and hydrophilicity of the surface layer were evaluated. As a result, the properties of the particles, the orientation state and the light transmittance of the surface layer were similar to those of Example 6 in both Examples 13 and 14.

As for hydrophilicity, it was confirmed that not only high hydrophilicity is exhibited in a dark place for a long period, but also oleic acid decomposition progresses faster than Example 6. As for the films in Examples 6, 13, and 14, antibacterial and antivirus properties were evaluated using Staphylococcus aureus, colon bacillus, and influenza viruses, and then it was confirmed that excellent antibacterial and antivirus properties are exhibited against all of them.

### (Example 15)

When the film produced in Example 6 was pasted on a glass or a board in the interior space of an automobile and its hydrophilicity was evaluated, a contact angle was 5° and thus high hydrophilicity was exhibited. Thus, dew condensation hardly occurred and the glass was prevented from being stained easily. Further, it was possible to suppress occurrence of mold.

Since the above-described hydrophilic film in each of Examples has the uniform surface layer, the decomposition performance for organic gas such as acetaldehyde can be exhibited stably. Further, since the hydrophilic film has transparency, visual problems of color unevenness and the like do not occur easily. Thus, the hydrophilic film can be preferably used for members used in the interior space of an automobile, and building materials, interior materials, home electronic appliances, and the like used in factories, shops, public facilities, houses, and the like.

### INDUSTRIAL APPLICABILITY

The hydrophilic film of the present invention is applied on various members and structures in which hydrophilicity is required. Such members and structures are effectively used for various products for which there are demanded effects such as stain-proofing, anti-fogging, dew condensation prevention, stain removal, and the like based on hydrophilicity.

## Claims

1. A hydrophilic film, comprising:
a base film made of an organic resin material; and
a surface layer containing particles, the surface layer being formed on a first surface of the base film and having an arithmetic mean surface roughness Ra as defined in JIS B 0601 (2001) of from 1 nm to 1000 nm at a reference length of 100 µm, as determined by calculation from a cross-sectional curve observed and measured using a surface shape measuring apparatus, a scanning probe microscope or an electron microscope,
wherein the particles are at least one selected from tungsten oxide particles and tungsten oxide composite particles, have crystal structure, and exist in a state in which their crystal directions are not oriented, as determined by X-ray diffraction or back scattering electron diffraction,
and wherein the mean particle diameter of the particles is in a range of not less than 2.7 nm nor more than 75 nm, as determined by image analysis of an SEM or TEM picture, and the aspect ratio of the particles is in a range of not less than 1 nor more than 3.5, as determined by image analysis of an SEM or TEM picture.

2. The hydrophilic film according to claim 1, wherein a thickness of the surface layer is in a range of not less than 2 nm nor more than 50 µm.

3. The hydrophilic film according to claim 1, further comprising an underlayer provided between the surface layer and the first surface of the base film, wherein the underlayer is composed of at least one material selected from a silicone modified resin, a colloidal silica containing resin, and a polysiloxane containing resin.

4. The hydrophilic film according to claim 1, further comprising a tackiness agent layer provided on a second surface, of the base film, opposite to the first surface.

5. The hydrophilic film according to claim 1, wherein the tungsten oxide composite includes a transition metal element in a range of not less than 0.001 mass% nor more than 50 mass%.

6. The hydrophilic film according to claim 1, wherein the tungsten oxide composite includes a titanium oxide in a range of not less than 0.01 mass% nor more than 50 mass%.

7. The hydrophilic film according to claim 1, further comprising a layer containing a titanium oxide, and provided between the surface layer and the first surface of the base film.

8. The hydrophilic film according to claim 1, wherein the tungsten oxide composite includes at least one element selected from copper, silver, and zinc in a range of not less than 0.001 mass% nor more than 1 mass%.

9. The hydrophilic film according to claim 1, wherein the surface layer contains a binder component of at least one selected from an inorganic binder and an organic binder.

10. The hydrophilic film according to claim 9, wherein the surface layer contains at least one selected from silica, alumina, and zirconia as the inorganic binder.

11. The hydrophilic film according to claim 1, wherein the base film is composed of at least one resin material selected from polyethylene terephthalate, vinyl chloride, acrylic, polycarbonate, polyolefin, polyethylene, polypropylene, polystyrene, and polytetrafluoroethylene.

12. A member comprising the hydrophilic film according to claim 1.

13. A structure comprising the hydrophilic film according to claim 1.

## Patentansprüche

1. Hydrophiler Film, umfassend:
einen aus einem organischen Harzmaterial bestehenden Trägerfilm; und
eine partikelhaltige Oberflächenschicht, wobei die Oberflächenschicht auf einer ersten Oberfläche des Trägerfilms ausgebildet ist und eine arithmetisch mittlere Oberflächenrauheit Ra, wie sie in JIS B 0601 (2001) definiert ist, von 1 nm bis 1000 nm bei einer Bezugslänge von 100 µm aufweist, wie mittels Berechnung aus einer unter Verwendung eines Oberflächenformmessgeräts, eines Rastersondenmikroskops oder eines Elektronenmikroskops betrachteten und vermessenen Querschnittskurve bestimmt,
wobei die Partikel in Form zumindest einer Art ausgewählt aus Partikeln von Wolframoxid und Partikeln eines Wolframoxid-Verbundwerkstoffs vorliegen, eine Kristallstruktur besitzen und in einem Zustand vorhanden sind, in welchem ihre Kristallrichtungen keine Orientierung aufweisen, wie mittels Röntgenstrahlbeugung oder Elektronenrückstreubeugung bestimmt,
und wobei der mittlere Partikeldurchmesser der Partikel in einem Bereich von nicht weniger als 2.7 nm und nicht mehr als 75 nm liegt, wie mittels Bildanalyse eines REM- oder TEM-Bilds bestimmt, und das Aspektverhältnis der Partikel in einem Bereich von nicht weniger als 1 und nicht mehr als 3.5 liegt, wie mittels Bildanalyse eines REM- oder TEM-Bilds bestimmt.

2. Hydrophiler Film gemäß Anspruch 1, wobei die Dicke der Oberflächenschicht in einem Bereich von nicht weniger als 2 nm und nicht mehr als 50 µm liegt.

3. Hydrophiler Film gemäß Anspruch 1, weiterhin umfassend eine Unterschicht, welche zwischen der Oberflächenschicht und der ersten Oberfläche des Trägerfilms bereitgestellt ist, wobei die Unterschicht aus zumindest einem Material ausgewählt aus einem silikonmodifizierten Harz, einem kolloidales Siliziumdioxid enthaltenden Harz, und einem Polysiloxan enthaltenden Harz gebildet ist.

4. Hydrophiler Film gemäß Anspruch 1, weiterhin umfassend eine Haftmittelschicht, welche gegenüber der ersten Oberfläche auf einer zweiten Oberfläche des Trägerfilms bereitgestellt ist.

5. Hydrophiler Film gemäß Anspruch 1, wobei der Wolframoxid-Verbundwerkstoff ein Übergangsmetallelement in einer Größenordnung von nicht weniger als 0.001 Masse% und nicht mehr als 50 Masse% enthält.

6. Hydrophiler Film gemäß Anspruch 1, wobei der Wolframoxid-Verbundwerkstoff ein Titanoxid in einer Größenordnung von nicht weniger als 0.01 Masse% und nicht mehr als 50 Masse% enthält.

7. Hydrophiler Film gemäß Anspruch 1, weiterhin umfassend eine Schicht, welche Titanoxid enthält und zwischen der Oberflächenschicht und der ersten Oberfläche des Trägerfilms bereitgestellt ist.

8. Hydrophiler Film gemäß Anspruch 1, wobei der Wolframoxid-Verbundwerkstoff zumindest ein Element ausgewählt aus Kupfer, Silber und Zink in einer Größenordnung von nicht weniger als 0.001 Masse% und nicht mehr als 1 Masse% enthält.

9. Hydrophiler Film gemäß Anspruch 1, wobei die Oberflächenschicht eine Bindemittelkomponente in Form zumindest einer Art ausgewählt aus einem anorganischen Bindemittel und einem organischen Bindemittel enthält.

10. Hydrophiler Film gemäß Anspruch 9, wobei die Oberflächenschicht zumindest eines ausgewählt aus Siliziumdioxid, Aluminiumoxid und Zirkoniumdioxid als anorganisches Bindemittel enthält.

11. Hydrophiler Film gemäß Anspruch 1, wobei der Trägerfilm aus zumindest einem Harzmaterial ausgewählt aus Polyethylenterephthalat, Vinylchlorid, Acrylat, Polycarbonat, Polyolefin, Polyethylen, Polypropylen, Polystyrol und Polytetrafluorethylen gebildet ist.

12. Element, umfassend den hydrophilen Film gemäß Anspruch 1.

13. Struktur, umfassend den hydrophilen Film gemäß Anspruch 1.

## Revendications

1. Film hydrophile, comprenant :
un film de base en un matériau de résine organique ; et
une couche de surface contenant des particules, la couche de surface étant formée sur une première surface du film de base et ayant une rugosité de surface moyenne arithmétique Ra telle que définie dans JIS B 0601 (2001) et déterminée par calcul à partir d'une courbe en coupe transversale observée et mesurée à l'aide d'un appareil de mesure de forme de surface, d'un microscope à sonde de balayage ou d'un microscope électronique, de 1 à 1 000 nm à une longueur de référence de 100 µm.
dans lequel les particules sont au moins d'un type choisi parmi les particules d'oxyde de tungstène et les particules composites à base d'oxyde de tungstène, ont une structure cristalline, et sont présentes à un état dans lequel leurs directions cristallines, déterminées par diffraction des rayons X ou diffraction d'électrons rétrodiffusés, ne sont pas orientées,
et dans lequel le diamètre de particule moyen des particules, déterminé par analyse d'image d'un cliché SEM ou TEM, est dans une plage non inférieure à 2,7 nm ni supérieure à 75 nm, et le rapport d'aspect des particules, déterminé par analyse d'image d'un cliché SEM ou TEM, est dans une plage non inférieure à 1 ni supérieure à 3,5.

2. Film hydrophile selon la revendication 1, dans lequel une épaisseur de la couche de surface est dans une plage non inférieure à 2 nm ni supérieure à 50 µm.

3. Film hydrophile selon la revendication 1, comprenant en outre une sous-couche située entre la couche de surface et la première surface du film de base, dans lequel la sous-couche est composée d'au moins un matériau choisi parmi une résine modifiée par une silicone, une résine contenant une silice colloïdale, et une résine contenant un polysiloxane.

4. Film hydrophile selon la revendication 1, comprenant en outre une couche d'agent à pouvoir collant située sur une seconde surface du film de base, à l'opposé de la première surface.

5. Film hydrophile selon la revendication 1, dans lequel le composite à base d'oxyde de tungstène contient un élément de métal de transition dans une plage non inférieure à 0,001 % en masse ni supérieure à 50 % en masse.

6. Film hydrophile selon la revendication 1, dans lequel le composite à base d'oxyde de tungstène contient un oxyde de titane dans une plage non inférieure à 0,01 % en masse ni supérieure à 50 % en masse.

7. Film hydrophile selon la revendication 1, comprenant en outre une couche contenant un oxyde de titane, et située entre la couche de surface et la première surface du film de base.

8. Film hydrophile selon la revendication 1, dans lequel le composite à base d'oxyde de tungstène contient au moins un élément choisi parmi le cuivre, l'argent, et le zinc dans une plage non inférieure à 0,001 % en masse ni supérieure à 1 % en masse.

9. Film hydrophile selon la revendication 1, dans lequel la couche de surface contient un composant liant d'au moins un type choisi parmi un liant inorganique et un liant organique.

10. Film hydrophile selon la revendication 9, dans lequel la couche de surface contient au moins un liant choisi parmi la silice, l'alumine et l'oxyde de zirconium en qualité de liant inorganique.

11. Film hydrophile selon la revendication 1, dans lequel le film de base est composé d'au moins un matériau de résine choisi parmi le polyéthylène téréphtalate, le chlorure de vinyle, une résine acrylique, le polycarbonate, une polyoléfine, le polyéthylène, le polypropylène, le polystyrène et le polytétrafluoro-éthylène.

12. Elément comprenant le film hydrophile selon la revendication 1.

13. Structure comprenant le film hydrophile selon la revendication 1.
